# EUROPÄISCHE PATENTSCHRIFT

(11) **EP 1 082 878 B1**
(45) Veröffentlichungstag und Bekanntmachung des Hinweises auf die Patenterteilung: **26.04.2006**
(21) Anmeldenummer: 99941257.0
(22) Anmeldetag: 26.05.1999
(51) Int. Cl.: H05B 3/34

(54) **HEIZMANSCHETTE FÜR ROHRE**
HEATING SLEEVE FOR PIPES
MANCHON CHAUFFANT POUR TUBES

(30) Priorität: 26.05.1998 DE 19823506
(43) Veröffentlichungstag der Anmeldung: 14.03.2001
(73) Patentinhaber: Latec AG, 8702 Zollikon (CH)
(72) Erfinder: OPPITZ, Hans, A-6068 Mils (AT)
(74) Vertreter: Kador & Partner
(86) Internationale Anmeldenummer: PCT/EP1999/003616
(87) Internationale Veröffentlichungsnummer: WO 1999/062300

(56) Entgegenhaltungen:
- EP-A- 0 307 198
- EP-A- 0 338 552
- DE-A- 3 230 421
- DE-A- 4 042 056
- GB-A- 1 396 590
- US-A- 4 719 335

## Beschreibung

Die Erfindung betrifft eine Heizmanschette für Rohre.

Die Beheizung von Rohren ist insbesondere für Rohrleitungen von großer Bedeutung, die im Freien verlegt werden und somit auch niedrigen Umgebungstemperaturen ausgesetzt sind. Aber auch zur Durchlauferwärmung von z.B. Flüssigkeiten werden Rohrheizungen eingesetzt. Ist die Rohrheizung fest mit dem Rohr verbunden, so stellen die Wartung und Reparatur der Heizung, insbesondere bei im Erdreich verlegten Rohren, ein Problem dar, da eine Reparatur in der Regel den Ausbau eines Rohrstückes aus der Rohrleitung erforderlich macht. Ist hingegen die Heizung ein separates Bauelement, so gestaltet sich das Anbringen der Heizung an dem Rohr und die thermische Isolierung des Rohres und der Rohrheizung schwierig.

Aus GB 1 396 590 ist ein elektrisch beheizbares Flächenheizelement bekannt, das eine erste starre Isolierschicht, einen darauf durch Aufbringen einer wässrigen Kunststoffdispersion, die elektrisch leitende Partikel und Kalium- oder Natrium-Silikate umfasst, erzeugten elektrisch leitenden Film mit entsprechenden Elektroden und eine weitere auf diesem Film aufgebrachte starre Isolierschicht umfasst. Dieses Flächenheizelement wird beispielsweise als Heizschale für Rohre verwendet.

In US 5,541,747 ist die Verwendung eines Materials mit positivem Temperaturkoeffizienten (PTC) in einem Heizelement, insbesondere einem Heizkissen für die therapeutische Verwendung, beschrieben. Das PTC-Material stellt vorzugsweise ein Gemisch aus einem oder mehreren Arten von Polyolefin-Harz, polyolefin Copolymeren und Ruß dar.

Der Erfindung liegt die Aufgabe zugrunde, eine Heizmanschette zu schaffen, bei der das Heizelement leicht an das zu erwärmende Rohr angelegt werden kann und gleichzeitig eine ausreichende Isolierung des Rohres gewährleistet wird. Diese Heizmanschette soll weiterhin einen einfachen Aufbau aufweisen und insbesondere eine einfache Zuführung des Stromes zu dem Heizelement ermöglichen.

Der Erfindung liegt die Erkenntnis zugrunde, daß diese Aufgabe durch eine Heizmanschette gelöst werden kann, bei der das Heizelement ein Widerstandsheizelement ist, das in einer Wärmedämmschicht integriert ist und die Stromzufuhr zu dem Heizelement durch die Wärmedämmschicht hindurch erfolgt.

Erfindungsgemäß wird diese Aufgabe durch eine Heizmanschette für Rohre gelöst, die einen Außenmantel, eine Wärmedämmschicht sowie ein an derInnenseite der Wärmedämmschicht angeordnetes flächiges Widerstandsheizelement umfaßt, wobei die Widerstandsmasse des Widerstandsheizelementes ein elektrisch leitendes Polymer umfaßt wobei die Fläche der Widertstandsmasse ein Gitter darstellt, wobei die Fäden des Gitters aus einem Kunststoff aus dem elektrisch leitenden Polymer gebildet sind oder die Fäden des Gitters aus einem anderen Material bestehen und mit diesem Kunststoff beschichtet sind, und Stromversorgungsleitungen der Elektroden des Widerstandsheizelementes durch die Wärmedämmschicht aus der Heizmanschette geführt sind.

Als Elektroden werden im Sinne der Erfindung die Teile des Widerstandsheizelementes bezeichnet, die der Stromzu-bzw. Abführung zu bzw. von der Widerstandsmasse dienen und mit dieser in unmittelbarem Kontakt stehen. Die durch die Widerstandsmasse gebildete Fläche wird im folgenden auch als Widerstandsschicht bezeichnet.

Durch die erfindungsgemäBe Heizmanschette wird zugleich die Erwärmung des Rohres durch das Widerstandsheizelement als auch die Wärmedämmung des Rohres durch die Wärmedämmschicht gewährleistet. Die erfindungsgemäß verwendete Widerstandsmasse weist eine Flexibilität auf, die es erlaubt das Widerstandsheizelement exakt an die Form des zu beheizenden Rohres anzulegen. Zugleich liegt die Wärmedämmung sogar in unmittelbarer Nähe zum Widerstandsheizelement aufgrund der geringen Dicke des Widerstandsheizelementes ideal an dem Rohr an. Wärmeverluste können so vermieden werden. Eine geringe Dicke kann mit dem erfindungsgemäß verwendeten Widerstandsheizelement realisiert werden, da das elektrisch leitende Polymer auch in geringer Dicke eine hohe Stabilität aufweist und das Beschädigen der Widerstandmasse, was zu einer lokalen Temperaturerhöhung führen würde, verhindert wird.

Ferner kann bei Verwendung eines elektrisch leitenden Polymers das Widerstandsheizelement als schwarzer Körper dienen, der Strahlungen aller Wellenlängen abgeben kann. Mit abnehmender Temperatur verschiebt sich die Weltenlänge der abgestrahlten Strahlung immer mehr zum Infrarot.

Besteht das zu beheizende Rohr aus einem Material, das diese Strahlungen transmittieren kann, z.B. aus Glas oder aus strahlendurchlässigem Kunststoff, so kann außer der Wärmeleitung Strahlungswärme in das Medium eintreten, das die Infrarotstrahlung in das Rohr eindringen und das darin befindliche Medium erwärmen. Durch die Tiefenwirkung sind in dem Heizelement selber keine besonders hohen Temperaturen erforderlich. Insbesondere bei Medien, die zur Zersetzung neigen, z.B. bei Wasser, wird das Ausfallen von Kalk und anderen Mineralsalzen dadurch vermieden.

Die Verwendung eines Widerstandsheizelementes, dessen Widerstandsmasse das elektrisch leitende Polymer umfaßt, hat weiterhin den Vorteil, daß dieses schon bei niedrigen Spannungen von beispielsweise 12 oder 24 V ausreichend Wärme erzeugt. Die Anforderungen an die elektrische Isolierung können somit gering sein. Zudem können herkömmliche Stromquellen, wie z.B. Batterien, zum Betreiben der erfindungsgemäßen Heizmanschette verwendet werden, die leicht an eine Rohrleitung angeordnet werden können. Es ist bei der erfindungsgemäßen Heizmanschette aber auch möglich, diese mit Netzspannung zu betreiben.

Mit dem erfindungsgemäß verwendeten Widerstandsheizelement können bei geringen Spannungen Leistungen bis zu 30 kW/m² auch im Langzeitbetrieb erzielt werden, ohne, daß das Widerstandsheizelement Schäden aufweist. Insbesondere bei der Verwendung von Kunststoffrohren soll die Flächenheizleistung geringer sein, um Probleme aufgrund der schlechteren Wärmeabgabe an das Rohr zu vermeiden. Mit dem erfindungsgemäß verwendeten Heizelement können Leistungen von 30 bis 60 W/m², vorzugsweise 30 bis 40 W/m² eingestellt werden. Durch diese Leistung können Isolationsverluste in der Temperatur des im Rohr befindlichen Mediums ausgeglichen werden.

In einer Ausführungsform umfaßt das Widerstandsheizelement der Heizmanschette mindestens zwei Elektroden, die sich in Längsrichtung durch die Fläche der Widerstandsmasse erstrecken, wobei der an den Elektroden angelegte Strom die Fläche der Widerstandsmasse senkrecht zu der Dicke der Widerstandsmasse durchfließt. Die Verwendung eines solchen Widerstandsheizelementes bringt den Vorteil mit sich, daß die Fläche der Widerstandsmasse, die zwischen den Elektroden liegt, und sich beim Anlegen einer Spannung an die Elektroden erwärmt, unmittelbar mit der Außenwand des Rohres in Kontakt gebracht werden kann. Der Wärmeübergang zwischen dem Widerstandsheizelement und dem Rohr wird dadurch optimiert.

Gemäß einer weiteren Ausführungsform stellt die Fläche der Widerstandsmasse des Widerstandsheizelementes ein Gitter dar, wobei die Fäden des Gitters aus einem Kunststoff aus dem elektrisch leitenden Polymer gebildet sind oder die Fäden des Gitters aus einem anderen Material bestehen und mit diesem Kunststoff beschichtet sind.

Dieses Gitter läßt sich aufgrund seiner Flexibilität leicht an die Krümmung des Rohres anpassen wodurch ein guter Kontakt und damit ein guter Wärmeübergang zwischen dem Widerstandsheizelement und dem Rohr gewährleistet wird. Auch bei mechanischer Belastung, die aufgrund von radial auf die Heizmanschette wirkenden Außendrücken erfolgen kann, kommt es bei der erfindungsgemäßen Heizmanschette zu einer gleichmäßigen Wärmeabgabe über die Fläche des Widerstandsheizelementes. Zum einen lassen die in einem Gitter definierten Kreuzungspunkte keine Relativänderung im Abstand zwischen den einzelnen Fäden des Gitters zu und zum anderen besteht durch die Verwendung eines Materials, das ein elektrisch leitendes Polymer umfaßt, aufgrund der Flexibilität nicht die Gefahr, das die Fäden und damit die elektrische Leitung abreißt. Dadurch tritt auch bei mechanischer Belastung keine lokale Temperaturerhöhung in der Widerstandsmasse auf. Ferner läßt sich ein solches Widerstandsheizelement leicht auf der Oberfläche einer Wärmedämmschicht anordnen bzw. in die Oberfläche einbringen. Weiterhin bietet die Ausgestaltung der Fläche der Widerstandsmasse als Gitter den Vorteil, daß sich durch geeignete Wahl der Gitterfäden der Stromfluß durch das Gitter und damit die Wärmeerzeugung gleichmäßig über die Fläche eingestellt werden kann.

Gemäß einer weiteren Ausführungsform stellt die Fläche der Widerstandsmasse eine kontinuierliche Schicht aus dem elektrisch leitenden Polymer dar. Bei dieser Ausgestaltung kann die Schicht unmittelbar auf das Rohr aufgebracht werden. Hierdurch wird eine zuverlässige Berührung der Fläche der Widerstandsmasse mit dem Rohr gewährleistet. Zudem wird bei einer kontinuierlichen Schicht eine gleichmäßige Wärmeabgabe über die Fläche gewährleistet. Gleichzeitig kann bei einer solchen Ausgestaltung die Wärmedämmschicht auch in unmittelbarer Nähe des Heizelementes an dem Rohr gut anliegen, da insbesondere eine kontinuierliche Schicht mit geringen Schichtdicken von 0,1 bis 5 mm, insbesondere 1 bis 2 mm hergestellt werden kann. Die Schichtdicke der Widerstandsschichten, die ein Gitter oder eine Matte umfassen, kann 1 bis 5 mm, vorzugsweise 1 bis 2 mm betragen.

Gemäß einer weiteren Ausführungsform erstrecken sich die Stromversorgungsleitungen der Elektroden in der erfindungsgemäßen Heizmanschette parallel zur Rohrachse durch die Wärmedämmschicht und ragen am axialen Ende der Heizmanschette aus der Wärmedämmschicht heraus.

Durch diesen Aufbau wird ein flexibler Einsatz der Heizmanschette ermöglicht. Die am Ende aus der Heizmanschette herausragenden Stromversorgungsleitungen können entweder an die Stromquelle oder an die Stromversorgungsleitungen einer weiteren erfindungsgemäßen Heizmanschette angeschlossen werden. Es ist somit möglich, große Teile einer Rohrleitung mit erfindungsgemäßen Heizmanschetten zu erwärmen, wobei diese hintereinander angeordnet sind und die Widerstandsheizelemente der einzelnen Manschetten parallel geschaltet seien können.

Indem die Stromversorgungsleitungen für die Elektroden durch die Wärmedämmschicht und nicht an dem zu beheizenden Rohr entlang geführt werden, ist die Berührungsfläche zwischen der Wärmedämmschicht und dem Rohr nicht durch diese Leitungen unterbrochen, was zu einem Wärmeverlust an diesen Stellen führen würde und eine zusätzliche elektrische Isolierung der Stromversorgungsleitungen erfordern würde. Erfindungsgemäß erfolgt die elektrische Isolierung der Stromversorgungsleitungen im wesentlichen durch die Wärmedämmschicht.

Gemäß einer weiteren Ausführungsform erstrecken sich die Stromversorgungsleitungen für die Elektroden in radialer Richtung durch die Wärmedämmschicht und den Außenmantel. Bei dieser Ausführungsform kann jede einzelne Heizmanschette mit einer Stromquelle verbunden werden oder mehrere hintereinander angeordnete Heizmanschetten durch Verbindung der Stromversorgungsleitungen, die dann entlang des Außenmantels geführt werden, mit einer einzigen Stromquelle kontaktiert werden.

Gemäß einer bevorzugten Ausführungsform besteht die Heizmanschette aus zwei Schalenhälften, wobei mindestens eine der Schalenhälften ein Widerstandsheizelement aufweist. Durch diesen Aufbau kann eine vorgefertigte Heizmanschette vor Ort an ein Rohr angelegt werden, indem die zwei Schalenhälften zusammengeführt werden. Durch die Lage der Stromversorgungsleitungen der Elektroden in der Wärmedämmschicht kann auch beim Vorsehen eines Widerstandsheizelementes in beiden Schalenhälften ein Kontakt zwischen den einzelnen Stromversorgungsleitungen und damit ein Kurzschluß vermieden werden.

Gemäß einer Ausruhrungsform weist das elektrisch leitende Polymer einen positiven Temperaturkoeffizienten des elektrischen Widerstandes auf. Hierdurch wird ein Selbstregeleffekt bezüglich der maximal erreichbaren Temperatur erzielt.

Es ist aber auch möglich, den Temperaturkoeffizienten des elektrischen Widerstandes des verwendeten elektrisch leitenden Polymers so einzustellen, daß er negativ ist und erst bei steigender Temperatur positiv wird. Hierdurch können die Einschaltströme an dem Heizelement gering gehalten werden, z. B. 50 % des Betriebsstromes betragen, und dennoch bei Betriebs-temperatur der Selbstregeleffekt des elektrisch leitenden Polymers mit positivem Temperaturkoeffizienten des elektrischen Widerstandes genutzt werden. Die Widerstandsmasse kann so gewählt werden, daß sich der positive Temperaturkoeffizient bei Temperaturen von 40 bis 50 °C einstellt.

Gemäß einer weiteren Ausführungsform kann auf der dem Rohr zugewandten Seite des Heizelementes eine Isolierschicht vorgesehen sein. Insbesondere bei Metallrohren kann so das Heizelement isoliert werden. Die Isolierschicht kann als Folie oder als Lack auf das Heizelement aufgebracht werden und aus bekannten Isolatoren z.B. Polyimid oder auch Silikonharz bestehen. Die Isolierschicht kann auch gleichzeitig als Klebeschicht dienen. Diese kann unmittelbar auf das Rohr aufgebracht werden und anschließend mit dem Heizelement bedeckt werden. Es liegt aber auch im Rahmen der Erfindung, die Klebeschicht auf dem Heizelement anzubringen. Bei dieser Ausführungsform kann diese beim ersten Erwärmen durch die erhöhte Temperatur klebefähig werden und bei Anlegen an das Rohr daran anhaften.

Diese Ausgestaltung bietet sich insbesondere für Heizmanschetten an, die aus zwei Schalenhälften bestehen, und vor Ort an das Rohr angelegt werden.

Die erfindungsgemäße Vorrichtung wird anhand der beiliegenden Zeichnungen im folgenden erläutert.

Es zeigen:
- Fig. 1:: eine Schalenhälfte der erfindungsgemäßen Heizmanschette.
- Fig. 2:: Schnitt durch die Heizmanschette aus Fig. 1 entlang der Linie A-A
- Fig. 3:: Teilschnitt eines erfindungsgemäß verwendeten Widerstandsheizelementes

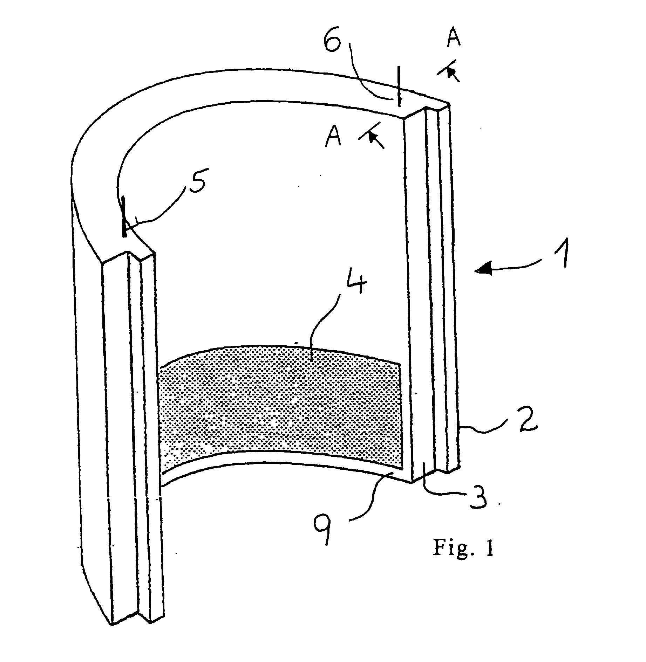

Bei der in Fig. 1 dargestellten Heizmanschette 1 ist eine Außenwand 2 vorgesehen, in der eine Wärmedämmschicht 3 angeordnet ist. Die Widerstandsmasse 4 des flächigen Widerstandsheizelementes ist bei der gezeigten Ausführungsform gitterartig ausgebildet und bedeckt den unteren Teil der Innenseite 9 der Wärmedämmschicht 3. Die Widerstandsmasse 4 ist an zwei Kanten abgewinkelt, die sich in die Wärmedämmschicht 3 erstrecken. An den in der Wärmedämmschicht 3 liegenden abgewinkelten Bereichen der Widerstandsmasse 4 sind die Elektroden angeordnet. Die Elektroden erstrecken sich bei der dargestellten Ausführungsform in Richtung der Achse des Rohres und liegen in der Wärmedämmschicht 3. Es liegt aber auch im Rahmen der Erfindung, die Elektroden auf der Innenseite 9 der Wärmedämmschicht 3 zu führen. Hierbei sind diese vorzugsweise in die Fläche der Widerstandsmasse eingebracht oder auf der der Wärmedämmschicht zugewandten Seite aufgebracht. Die Stromversorgungsleitungen 5, 6, an die die Elektroden angeschlossen sind, ragen am Ende der Heizmanschette 1 aus der Wärmedämmschicht 3 heraus.

Werden die Stromversorgungsleitungen 5, 6 der dargestellten Heizmanschette 1 mit der Stromquelle (nicht dargestellt) verbunden, so fließt ein Heizstrom durch die Stromversorgungsleitung 5 zu der einen Elektrode und von dieser über die Widerstandsmasse 4 zu der zweiten Elektrode, um von dieser zu der weiteren Stromversorgungsleitung 6 geführt zu werden. Durch den Stromfluß durch die Widerstandsmasse 4 erhitzt sich diese in der gesamten Fläche. Diese Widerstandsmasse 4 liegt unmittelbar an dem zu beheizenden Rohr an und kann somit zu einer idealen Wärmeübertragung an das Rohr beitragen.

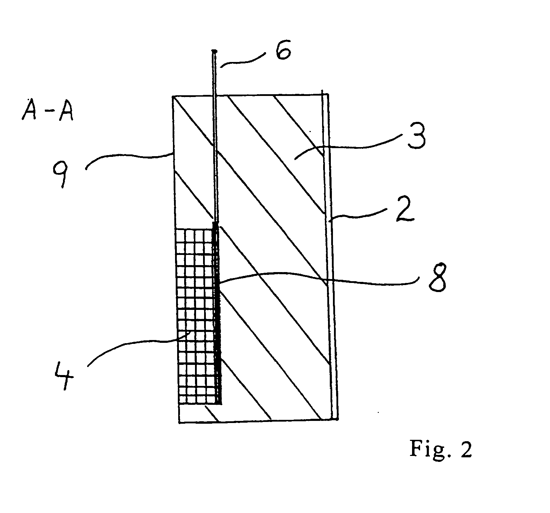

In Fig. 2 ist die Lage einer Stromversorgungsleitungen 6 und der damit verbundenen Elektrode 8 in der Ausführungsform der Heizmanschette 1 nach Fig. 1 gezeigt. Die Elektrode 8 erstreckt sich durch die Fläche der Widerstandsmasse 4. Die Widerstandsmasse 4, die eine dünne Schicht in Form eines Gitters darstellt, erstreckt sich in der Wärmedämmschicht 3 in radialer Richtung zu der Innenseite 9 der Wärmedämmschicht 3. Der Abstand zwischen der Elektrode 8 und der Innenseite 9 der Wärmedämmschicht 3 wird vorzugsweise gering gehalten. Über diesen Bereich ist nämlich die flächige Widerstandsmasse 4 von Isoliermaterial umgeben und kann die in ihr erzeugte Wärme nicht an das zu beheizende Rohr abgeben.

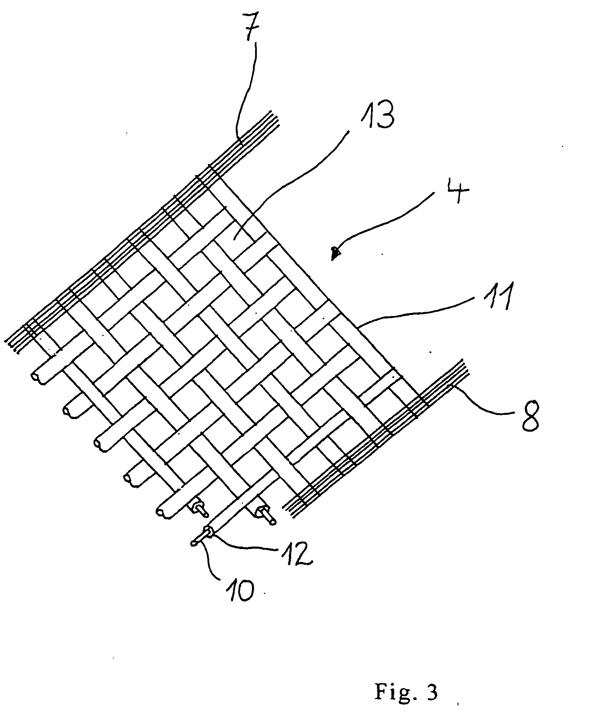

In Figur 3 ist schematisch ein erfindungsgemäß verwendetes Widerstandsheizelement gezeigt. Die Widerstandsmasse 4 umfasst ein Gitter aus einem elektrisch nicht leitenden Material 10, dessen Fäden 11 mit einer Schicht 12 aus einem elektrisch leitenden Polymer bedeckt sind. In der dargestellten Ausführung sind die einzelnen Gitterfäden 11 mit dem Polymer beschichtet, wodurch die durch das Gitter gebildeten Öffnungen 13 verbleiben. Bei der Herstellung des Gitters können die Öffnungen des Gitters nach Beschichtung mit dem elektrisch leitenden Polymer ausgeblasen werden. Hierdurch wird zum einen eine Materialersparnis und zum anderen eine hohe Flexibilität des Widerstandsheizelementes erzielt. Die Elektroden 7, 8 erstrecken sich an zwei Enden der Fläche der Widerstandsmasse 4. Die Elektroden können in das Gitter der Widerstandsmasse 4 eingebracht, z.B. eingewoben sein, oder auf der Widerstandsmasse 4 aufgebracht sein.

Wird die Widerstandsmasse des Widerstandsheizelementes durch ein Gitter gebildet, dessen Fäden aus einem elektrisch nicht leitenden Material dargestellt und die mit einem elektrisch leitenden Polymer beschichtet sind, so können diese Fäden als Grundmaterial Glas- oder Kunststoffasern, z.B. aus Polyamid oder Polyester, umfassen.

Die Elektroden werden bei dem erfindungsgemäß eingesetzten Heizelement vorzugsweise durch Lahnbänder gebildet. Diese Bänder können leicht in das Widerstandsheizelement eingefügt werden und aufgrund ihrer Flexibilität auch in die Wärmedämmschicht geführt werden. Zur Verbesserung des elektrischen Kontaktes zwischen der Widerstandsmasse und den Elektroden kann die Widerstandsmasse im Bereich der Elektroden mit einer aufgespritzten Schicht aus Metall metallisiert sein. Wird als Fläche der Widerstandsmasse eine kontinuierliche Schicht des elektrisch leitenden Polymers verwendet, so können die Elektroden durch aufgespritztes Metall gebildet werden. Diese Ausführungsform wird vorzugsweise für Heizmanschetten gewählt, die bei nur geringer Leistung betrieben werden. Als Stromversorgungsleitungen können herkömmliche Drähte verwendet werden. Auch die Verbindung der Stromversorgungsleitung zu der Elektrode kann durch herkömmliche Anschlussmittel verwirklicht werden.

Besteht das Gitter der Widerstandsmasse aus Fäden, die vollständig aus dem elektrisch leitenden Polymer hergestellt sind, so kann ein gleichmäßiger Stromdurchgang durch die Fläche der Widerstandsmasse durch geeignete Wahl der Durchmesser der Fäden erzielt werden. Hierbei wird der Durchmesser der Fäden des Gitters, die parallel zu den Elektroden verlaufen, kleiner als der Durchmesser, der senkrecht zu den Elektroden verlaufenden Fäden gewählt. Ein gleichmäßiger Stromdurchgang kann auch durch geeignete Wahl des Materials der Fäden erzielt werden. Hierbei wird das Material für die Fäden, die senkrecht zu den Elektroden verlaufen, so gewählt, daß dieses einen höheren Leitwert aufweist als das der parallel zu diesen verlaufenden Fäden. Hierbei kann eine Differenz in der Leitfähigkeit zwischen den parallel und den senkrecht verlaufenden Fäden von 15 bis 25 %, vorzugsweise 20 %, ausreichen, um den Stromfluß durch die Fäden zu regeln und ideal über die gesamte Fläche zu verteilen, wodurch diese gleichmäßig erwärmt wird.

Es liegt auch im Rahmen der Erfindung, die Widerstandsmasse durch ein Stützgewebe zu bilden, das auf beiden Seiten mit einer Schicht eines elektrisch leitenden Polymers bedeckt ist. Eine solche Widerstandsmasse kann durch Eintauchen des Stützgewebes in eine Masse, die das elektrisch leitenden Polymer umfaßt, hergestellt werden. Hierbei werden auch Poren oder Öffnungen des Stützgewebes mit dem elektrisch leitenden Polymer gefüllt. Als Stützgewebe kann beispielsweise eine Glasfaser- oder Kunststofffasermatte dienen.

Der Außenmantel der Heizmanschette kann aus Metall oder Kunststoff bestehen. Die Wärmedämmschicht besteht vorzugsweise aus Schaumstoff, z.B. Polyurethan, kann aber auch aus anderen isolierenden Materialien, wie z.B. Glasfasermatten, gebildet sein. Bei der Verwendung von Schaumstoff wird das Heizelement zusätzlich an das Rohr angepreßt.

Es liegt auch im Sinne der Erfindung das Widerstandsheizelement in die innere Oberfläche der Wärmedämmschicht einzubringen. Durch diese Anordnung des Widerstandsheizelementes wird eine ebene innere Oberfläche der Heizmanschette geschaffen und dadurch ein gleichmäßiger Kontakt von sowohl dem Widerstandsheizelement als auch der Wärmedämmschicht mit dem zu beheizenden Rohr gewährleistet. Bei dieser Ausführungsform besteht die Wärmedämmschicht vorzugsweise aus Schaumstoff, in den die eine Seite des Widerstandsheizelementes und die Stromversorgungsleitungen, sowie gegebenenfalls die Elektroden vollständig eingeschäumt werden.

Das Widerstandsheizelement kann aber auch auf die Wärmedämmschicht an deren Innenseite aufgebracht werden. Hierbei können das elektrisch leitende Polymer oder herkömmliche Kunststoffe wie Polyimid zur Befestigung dienen.

In der Heizmanschette kann auf der der Wärmedämmschicht zugewandten Oberfläche der Widerstandsmasse eine Reflexionsschicht vorgesehen sein, die die von der Widerstandsmasse abgegebenen Strahlungen in Richtung des Rohres lenkt. Dies ist insbesondere von Vorteil, wenn der Außenmantel der Heizmanschette aus Kunststoff besteht.

Bei der erfindungsgemäßen Heizmanschette kann das Widerstandsheizelement einen beliebig großen Bereich der Innenseite der Wärmedämmschicht bedecken. Es liegt auch im Rahmen der Erfindung, mehrere Widerstandsheiz-elemente in einer Heizmanschette vorzusehen, wobei diese sich in radialer oder axialer Richtung erstrecken können. Mit dem erfindungsgemäß verwendeten Heizelement ist es möglich, schon bei geringen Spannungen von z.B. 24 oder 40 V ein Rohr mit einem Umfang von 30 bis 50 cm mit einer Heizmanschette, in der nur ein Heizelement angeordnet ist, zu umgeben und dieses dennoch ausreichend zu erwärmen. Bei Anlegen von Netzspannung können auch Rohre von einem Umfang von mehr als einem Meter so erwärmt werden. Dieser große Elektrodenabstand kann aufgrund des erfindungsgemäß verwendeten elektrisch leitenden Polymers ermöglicht werden. Mit der erfindungsgemäßen Heizmanschette können Temperaturen von 50 bis 60°C erzeugt werden. Es ist aber auch möglich, geringere Temperaturen von 20 °C zu erzeugen. Durch diese Temperaturen können unterschiedliche Medien, wie beispielsweise Schweröl in dem Rohr erwärmt werden. Die Heizmanschette kann so auch z.B. für Pipelines verwendet werden.

Das erfindungsgemäß verwendete elektrisch leitende Polymer ist vorzugsweise durch Dotierung eines Polymers erzeugt. Die Dotierung kann eine Metall- oder Halbmetall-Dotierung sein. Bei diesen Polymeren ist der Störleiter chemisch an die Polymerkette gebunden und erzeugt eine Störstelle. Die Dotierungsatome und das Matrixmolekül bilden einen sogenannten Charge-Transfer Komplex. Bei der Dotierung werden Elektronen werden aus gefüllten Bändern des Polymers auf das Dotierungsmaterial übertragen. Durch die so entstandenen Elektronenlöcher erhält das Polymer halbleiterähnliche elektrische Eigenschaften. Durch chemische Reaktion wird bei dieser Ausführungsform ein Metall- oder Halbmetallatom so in die Polymerstruktur einbezogen bzw. an diese angelagert, daß hierdurch freie Ladungen erzeugt werden, die den Stromfluß entlang der Polymerstruktur ermöglichen. Die freien Ladungen liegen in Form von freien Elektronen oder Löchern vor. Es entsteht somit ein Elektronenleiter.

Vorzugsweise wurde das Polymer zum Dotieren mit einem Dotierungsmaterial in einer solchen Menge versetzt, daß das Verhältnis von Atomen des Dotierungsmaterials zu der Anzahl der Polymermoleküle mindestens 1:1, vorzugsweise zwischen 2:1 und 10:1, beträgt. Durch diesesVerhältnis wird erzielt, daß im wesentlichen alle Polymermoleküle zumindest mit einem Atom des Dotierungsmaterials dotiert sind. Durch Wahl des Verhältnisses kann der Leitwert der Polymere und dadurch der Widerstandsschicht, sowie der Temperaturkoeffizient des Widerstandes der Widerstandsschicht eingestellt werden.

Obwohl das erfindungsgemäß verwendete elektrisch leitende Polymer auch ohne Zusatz von Graphit in der erfindungsgemäßen Heizmanschette als Material für die Widerstandsschicht eingesetzt werden kann, kann gemäß einer weiteren Ausführungsform die Widerstandschicht zusätzlich Graphitpartikel aufweisen. Diese Partikel können zu der Leitfähigkeit der gesamten Widerstandsschicht beitragen und berühren sich vorzugsweise nicht und bilden insbesondere keine Gitter- oder Skelettstrukturen aus. Die Graphitpartikel sind nicht fest in die Polymerstruktur eingebunden, sondern liegen frei beweglich vor. Befindet sich ein Graphitpartikel im Kontakt mit zwei Polymermolekülen, so kann der Strom von der einen Kette über das Graphit auf die nächste Kette überspringen.Die Leitfähigkeit der Widerstandsschicht kann so noch erhöht werden. Zugleich können die Graphitpartikel aufgrund ihrer freien Beweglichkeit in der Widerstandsschicht an die Elektroden gelangen und dort einen Verbesserung des Kontaktes bewirken.

Die Graphitpartikel liegen vorzugsweise in einer Menge von maximal 20 vol-%, besonders bevorzugt maximal 5 vol%, bezogen auf das Gesamtvolumen der Widerstandsschicht vor und weisen einen mittleren Durchmesser von maximal 0,1 µm auf. Durch diese geringe Menge an Graphit und den geringen Durchmesser kann das Ausbilden eines Graphitgitters, das zu einer Leitung des Stromes über diese Gitter führen würde vermieden werden. Es wird somit sicher gestellt, daß der Stromfluß weiterhin im wesentlichen über die Polymermoleküle durch Elektronen-Leitungen erfolgt und so die oben genannten Vorteile erzielt werden können. Insbesondere muß die Leitung nicht über ein Graphitgitter bzw. Skelett erfolgen, bei dem sich die Graphitpartikel berühren müssen und das bei mechanischer und thermischer Belastung leicht zerstört wird, sondern sie erfolgt entlang dem dehnbaren und alterungsbeständigen Polymer.

Als elektrisch leitende Polymere können sowohl elektrisch leitende Polymerisate wie Polystyrol, Polyvinylharze, Polyacrylsäure-Derivate und Mischpolymerisate derselben, als auch elektrisch leitende Polyamide und deren Derivate, Polyfluorkohlenwasserstoffe, Epoxyharze und Polyurethane verwendet werden. Bevorzugt können Polyamide, Polymethylmethacrylate, Epoxide, Polyurethane sowie Polystyrol oder Mischungen davon verwendet. Hierbei weisen Polyamide zusätzlich gute Klebeigenschaften auf, die für die Herstellung der erfindungsgemäßen Heizmanschette von Vorteil sind, da hierdurch das Anbringen an dem Rohr erleichtert wird. Einige Polymere, wie z.B. Polyacetylene scheiden aufgrund ihrer geringen Alterungsbeständigkeit durch Reaktionsfreudigkeit mit Sauerstoff für den erfindungsgemäßen Einsatz aus.

Die Länge der verwendeten Polymermoleküle variiert in großen Bereichen abhängig von der Art und der Struktur des Polymers liegt aber vorzugsweise mindestens bei 500 , besonders bevorzugt bei mindestens 4000 Å.

Als elektrisch leitendes Polymer können erfindungsgemäß in der Widerstandsfläche der Heizmanschette insbesondere solche Polymere verwendet werden, die durch Metall- oder Halbmetallatome, die an die Polymere angelagert sind, leitfähig sind. Diese Polymere besitzen vorzugsweise einen spezifischen Durchgangswiderstand im Bereich der Werte, die von Halbleitern erzielt werden. Er kann bis zu 10² Ω·cm betragen, vorzugsweise liegt er höher, höchstens aber 10⁵ Ω·cm. Solche Polymere können durch ein Verfahren erhalten werden, bei dem Polymer-Dispersionen, Polymer-Lösungen oder Polymere mit Metall- oder Halbmetallverbindungen oder deren Lösung in einer Menge versetzt werden, so daß auf ein Polymer-Molekül annähernd ein Metall- oder Halbmetallatom kommt. Dieser Mischung wird ein Reduktionsmittel in geringem Überschuß zugegeben oder durch bekannte thermische Zersetzung Metall- oder Halbmetallatome gebildet. Anschließend werden die gebildeten oder noch vorhandenen Ionen ausgewaschen und die Dispersionslösung, oder das Granulat kann gegebenenfalls mit Graphit oder Ruß versetzt werden.

Die erfindungsgemäß eingesetzten elektrisch leitenden Polymere sind vorzugsweise frei von Ionen. Maximal beträgt der Gehalt an freien Ionen 1 Gew.% bezogen auf das Gesamtgewicht der Widerstandsschicht. Die Ionen werden entweder wie oben beschrieben ausgewaschen oder es wird ein geeignetes Reduktionsmittel zugegeben. Das Reduktionsmittel wird in einem solchen Verhältnis zugegeben, daß die Ionen vollständig reduziert werden können. Der geringe Anteil an Ionen, vorzugsweise die Ionenfreiheit der erfindungsgemäß verwendeten elektrisch leitenden Polymere bewirkt eine lange Beständigkeit der Widerstandsschicht unter Einwirkung von elektrischen Strömen. Wie sich gezeigt hat, besitzen Polymere, die Ionen zu einem höheren Prozentsatz enthalten, eine nur geringe Alterungsbeständigkeit bei Einwirkung von elektrischen Strömen, da es durch Elektroylse-Reaktionen zur Selbstzerstörung der Widerstandsschicht kommt. Das erfindungsgemäß verwendete elektrisch leitende Polymer hingegen ist aufgrund der geringen Ionenkonzentration auch bei längerer Beaufschlagung mit Strom alterungsbeständig. Als Reduktionsmittel für das oben beschriebene Verfahren zur Herstellung eines erfindungsgemäß eingesetzten elektrisch leitenden Polymers werden solche Reduktionsmittel verwendet, die entweder keine Ionen bilden, weil sie thermisch bei der Verarbeitung zersetzt werden, wie z.B. Hydrazin, oder mit dem Polymer selbst chemisch reagieren, wie z.B. Formaldehyd oder solche, deren Überschuß oder Reaktionsprodukte sich leicht auswaschen lassen, wie z.B. Hypophosphite. Als Metall oder Halbmetalle werden vorzugsweise Silber, Arsen, Nickel, Graphit oder Molybdän verwendet. Besonders bevorzugt sind solche Metall oder Halbmetallverbindungen, die durch reine thermische Zersetzung das Metall oder Halbmetall ohne störende Reaktionsprodukte bilden. Insbesondere Arsenwasserstoff oder Nickelcarbonyl haben sich als besonders vorteilhaft erwiesen. Die erfindungsgemäß verwendeten elektrisch leitenden Polymere können z.B. hergestellt werden, indem das Polymer mit 1-10 Gew-% (bezogen auf das Polymer) einer Vormischung, die nach einer der folgenden Rezepturen hergestellt wurde, versetzt wird.
- Beispiel 1:: 1470 Gew.Teile Dispersion von Fluorkohlenwasserpolymers (55 % Feststoff in Wasser), 1 Gew.-Teil Netzmittel, 28 Gew.-Teile Silbemitratlösung 10 %, 6 Gew.-Teile Kreide, 8 Gew.-Teile Ammoniak, 20 Gew.-Teile Ruß, 214 Gew.-Teile Graphit, 11 Gew.-Teile Hydrazinhydrat.
- Beispiel 2:: 1380 Gew.-Teile Acrylharzdispersion 60 Gew.-% in Wasser, 1 Gew.-Teil Netzmittel, 32 Gew.-Teile Silbernitratlösung 10 %ig, 10 Gew.-Teile Kreide, 12 Gew.-Teile Ammoniak, 6 Gew.-Teile Ruß. 310 Gew.-Teile Graphit, 14 Gew.-Teile Hydrazinhydrat.
- Beispiel 3:: 2200 Gew.-Teile dest. Wasser, 1000 Gew.-Teile Styrol (monomer). 600 Gew.-Teile Ampholytseife (15 %ig), 2 Gew.-Teile Natriumpyrophosphat, 2 Gew.-Teile Kaliumpersulfat, 60 Gew.-Teile Nickelsuflat, 60 Gew.-Teile Natriumhypophospit, 30 Gew.-Teile Adipinsäure, 240 Gew.-Teile Graphit.

## Patentansprüche

1. Heizmanschette (1) für Rohre, die einen Außenmantel (2), eine Wärmedämmschicht (3), sowie ein an der Innenseite (9) der Wärmedämmschicht (3) angeordnetes, flächiges Widerstandsheizelement umfasst, wobei die Widerstandsmasse (4) des Widerstandsheizelementes ein elektrisch leitendes Polymer umfasst, wobei die Fläche der Widerstandsmasse (4) ein Gitter darstellt, wobei die Fäden (11) des Gitters aus einem Kunststoff aus dem elektrisch leitenden Polymer gebildet sind oder die Fäden des Gitters aus einem anderen Material bestehen und mit diesem Kunststoff beschichtet sind, und die Stromversorgungsleitungen (5, 6) der Elektroden (7, 8) des Widerstandsheizelementes durch die Wärmedämmschicht (3) aus der Heizmanschette (1) geführt sind.

2. Heizmanschette gemäß Anspruch 1, **dadurch gekennzeichnet, daß** das Widerstandsheizelement mindestens zwei Elektroden (7, 8) umfaßt, die sich in Längsrichtung durch die Fläche der Widerstandsmasse (4) erstrecken, wobei der an den Elektroden (7, 8) angelegte Strom die Fläche der Widerstandsmasse (4) senkrecht zu der Dicke der Fläche der Widerstandsmasse (4) durchfließt.

3. Heizmanschette gemäß einem der Ansprüche 1 oder 2, **dadurch gekennzeichnet, daß** die Fläche der Widerstandsmasse (4) eine kontinuierliche Schicht aus dem elektrisch leitenden Polymer darstellt.

4. Heizmanschette gemäß einem der Ansprüche 1 bis 3, **dadurch gekennzeichnet, daß** sich die Stromversorgungsleitungen (5, 6) der Elektroden (7, 8) parallel zur Rohrachse durch die Wärmedämmschicht (3) erstrekken und am axialen Ende der Heizmanschette (1) aus der Wärmedämmschicht (3) herausragen.

5. Heizmanschette gemäß einem des vorstehenden Ansprüche, **dadurch gekennzeichnet, daß** sich die Stromversorgungsleitungen (5, 6) der Elektroden (7, 8) in radialer Richtung durch die Wärmedämmschicht (3) und den Außenmantel (2) erstrecken.

6. Heizmanschette gemäß einem der vorstehenden Ansprüche, **dadurch gekennzeichnet, daß** diese aus zwei Schalenhälften besteht, wobei mindestens eine der Schalenhälften ein Widerstandsheizelement aufweist.

7. Heizmanschette gemäß einem der vorstehenden Ansprüche, **dadurch gekennzeichnet, daß** das elektrisch leitende Polymer einen positiven Temperaturkoeffizienten des elektrischen Widerstandes aufweist.

8. Heizmanschette gemäß einem der Ansprüche 1 bis 6, **dadurch gekennzeichnet, daß** der Temperaturkoeffizient des Widerstandes des elektrisch leitenden Polymers negativ ist und mit steigender Temperatur positiv wird.

9. Heizmanschette gemäß einem der vorstehenden Ansprüche, **dadurch gekennzeichnet, daß** auf der dem Rohr zugewandten Seite des Widerstandsheizelementes eine Isolierschicht vorgesehen ist.

## Claims

1. A heating sleeve (1) for pipes, comprising an outer sheath (2), a heat insulating layer (3) and a flat resistance heating element disposed on the inner side (9) of the heat insulating layer (3), whereby the resistance mass (4) of the resistance heating element comprises an electroconductive polymer, whereby the surface of the resistance mass (4) constitutes a grid, whereby the threads (11) of the grid are formed of a synthetic material comprising the electroconductive polymer, or the threads of the grid consist of another material and are coated with said synthetic material, and the current supply lines (5, 6) of the electrodes (7, 8) of the resistance heating element are guided out of the heating sleeve (1) through the heat insulating layer (3).

2. The heating sleeve according to claim 1, **characterized in that** the resistance heating element comprises at least two electrodes (7, 8) extending in the longitudinal direction through the surface of the resistance mass (4), whereby the current applied to the electrodes (7, 8) flows through the surface of the resistance mass (4) perpendicular to the thickness of the surface of the resistance mass (4).

3. The heating sleeve according to either of claims 1 and 2, **characterized in that** the surface of the resistance mass (4) constitutes a continuous layer comprising the electroconductive polymer.

4. The heating sleeve according to any of claims 1 to 3, **characterized in that** the current supply lines (5, 6) of the electrodes (7, 8) extend through the heat insulating layer (3) parallel to the pipe axis and protrude from the heat insulating layer (3) at the axial end of the heating sleeve (1).

5. The heating sleeve according to any of the above claims, **characterized in that** the current supply lines (5, 6) of the electrodes (7, 8) extend through the heat insulating layer (3) and the outer sheath (2) in the radial direction.

6. The heating sleeve according to any of the above claims, **characterized in that** it consists of two half-shells, at least one of the half-shells having a resistance heating element.

7. The heating sleeve according to any of the above claims, **characterized in that** the electroconductive polymer has a positive temperature coefficient of electrical resistance.

8. The heating sleeve according to any of claims 1 to 6, **characterized in that** the temperature coefficient of resistance of the electroconductive polymer is negative and becomes positive with increasing temperature.

9. The heating sleeve according to any of the above claims, **characterized in that** an insulating layer is provided on the side of the resistance heating element facing the pipe.

## Revendications

1. Manchon chauffant (1) pour tubes, qui comporte une enveloppe extérieure (2), une couche de calorifugeage (3) ainsi qu'un élément plat de chauffage par résistance, disposé sur la face intérieure (9) de la couche de calorifugeage (3), dans lequel la masse de résistance (4) de l'élément de chauffage par résistance comporte un polymère électriquement conducteur, dans lequel la surface de la masse de la résistance (4) est formée d'une grille, dans lequel les fils (11) de la grille sont formés par une matière plastique constituée par le polymère électriquement conducteur ou les fils de la grille sont constitués par un autre matériau et sont recouverts par cette matière plastique, et les lignes d'alimentation en courant (5,6) des électrodes (7,8) de l'élément de chauffage par résistance sortent du manchon chauffant (1) en étant conduites à l'intérieur de la couche de calorifugeage (3).

2. Manchon chauffant selon la revendication 1, **caractérisé en ce que** l'élément de chauffage par résistance comprend au moins deux électrodes (7,8), qui s'étendent longitudinalement à travers la surface de la masse de résistance (4), le courant appliqué aux électrodes (7,8) traversant la surface de la masse de résistance (4) perpendiculairement à l'épaisseur de la surface de la masse de résistance (4).

3. Manchon chauffant selon l'une des revendications 1 ou 2, **caractérisé en ce que** la surface de la masse de résistance (4) est formée par une couche continue constituée du polymère électriquement conducteur.

4. Manchon chauffant selon l'une des revendications 1 à 3, **caractérisé en ce que** les lignes d'alimentation en courant (5,6) des électrodes (7,8) s'étendent parallèlement à l'axe du tube à l'intérieur de la couche de calorifugeage (3) et émergent de la couche de calorifugeage (3) au niveau de l'extrémité axiale du manchon chauffant (1).

5. Manchon chauffant selon l'une des revendications précédentes, **caractérisé en ce que** les lignes d'alimentation en courant (5,6) des électrodes (7,8) s'étendent radialement à travers la couche de calorifugeage (3) et l'enveloppe extérieure (2).

6. Manchon chauffant selon l'une des revendications précédentes, **caractérisé en ce que** ce manchon est constitué de deux demi-coques, au moins l'une des demi-coques comportant un élément de chauffage par résistance.

7. Manchon chauffant selon l'une des revendications précédentes, **caractérisé en ce que** le polymère électriquement conducteur possède un coefficient de température positif de la résistance électrique.

8. Manchon chauffant selon l'une des revendications 1 à 6, **caractérisé en ce que** le coefficient de température de la résistance du polymère électriquement conducteur est négatif et devient positif lorsque la température augmente.

9. Manchon chauffant selon l'une des revendications précédentes, **caractérisé en ce qu'**une couche isolante est aménagée sur la face de l'élément de chauffage par résistance, qui est tournée vers le tube.
